(19) Europäisches Patentamt
European Patent Office
Office européen des brevets

(11) Publication number: 0 246 957 B1

(12) # EUROPEAN PATENT SPECIFICATION

(45) Date of publication of patent specification: 30.09.92

(51) Int. Cl.5: C25B 1/00, C25C 1/00, C25B 1/02

(21) Application number: 87401097.8

(22) Date of filing: 14.05.87

(54) **A method for treating organic waste material and a catalyst/cocatalyst composition useful therefor.**

(30) Priority: 19.05.86 US 864410
19.05.86 US 864411

(43) Date of publication of application:
25.11.87 Bulletin 87/48

(45) Publication of the grant of the patent:
30.09.92 Bulletin 92/40

(84) Designated Contracting States:
DE FR GB

(56) References cited:
DE-A- 3 246 499
GB-A- 2 106 936
US-A- 4 312 721
US-A- 4 312 721
US-A- 4 341 608

JOURNAL OF THE ELECTROCHEMICAL SOCIETY, vol. 129, no. 8, August 1982, pages 1719-1724, Manchester, New Hampshire, US; P.M. DHOOGE et al.: "Electrochemical studies of coal slurry oxidation mechanisms"

CHEMICAL ABSTRACTS, vol. 101, no. 10, September 1984, page 183, abstract no. 75913n, Columbus, Ohio, US; A.J. DARNELL et al.: "Production of hydrogen from renewable resources. Final subcontract report", & REPORT 1983, SERI/STR-231-1875; Order No. DE84000082, 77 pp.

(73) Proprietor: DELPHI RESEARCH INC.
701 Haines Avenue N.W.
Albuquerque New Mexico 87102(US)

(72) Inventor: Dhooge, Patrick M.
Dixon Road
Corrales New Mexico 87048(US)

(74) Representative: Overath, Philippe et al
Cabinet Bede 13, Avenue Antoine Depage
B-1050 Bruxelles(BE)

EP 0 246 957 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Field of the Invention

This invention relates to a catalyst composition of an electrocatalyst and a homogeneous cocatalyst, and use of the catalyst composition for the electrochemical gasification of organic waste material in an electrolyte.

Background of the Invention

Carbonaceous materials are oxidized when suspended in an electrolyte containing a reversible or quasireversible electrocatalyst and a homogeneous cocatalyst. The electrocatalyst is regenerated in an electrochemical cell through which a direct current is passed, the water being reduced to form hydrogen or metal ions reduced to the metal at the cathode. The reduced electrocatalyst is reoxidized at the anode.

U.S. Patent 4,412,893 concerns electrolyzing cations at a cathode of an electrolytic cell, wherein anolyte contains ferrous ion as a reducing agent. The electrolysis is conducted while the anolyte is agitated or while the anode moves with respect to the anolyte, providing relative motion between the anode and the anolyte, promoting contact of the anode with the ferrous ion despite their mutual electrostatic repulsion. A static relationship between the cathode and the catholyte is required. The concentration of the ferrous ion is in the range from 0.5 to 10 grams per liter.

U.S. Patent 4,389,288 relates to electrochemical gasification of carbonaceous material by anodic oxidation in an aqueous acidic electrolyte to produce oxides of carbon at the anode and hydrogen at the cathode of an electrolytic cell using an iron catalyst.

U.S. Patent 4,268,363 provides for electrochemical gasification of carbonaceous materials by anodic oxidation, producing oxides of carbon at the anode and hydrogen or metallic elements at the cathode of an electrolytic cell. Carbonaceous materials may also be hydrogenated at the cathode by electrochemical reactions during which carboneaceous material may also be anodically reacted within the anode compartment of an electrolytic cell. Typical examples of metals produced at the cathode include chromium, manganese, cobalt, nickel, copper, indium, and tellurium.

According to U.S. Patent 4,341,608, hydrogen is produced from an electrolytic cell system by oxidizing a biomass product using a process of depolarizing the anode of the aqueous electrolytic cell. Particular catalyst systems are not disclosed.

U.S. Patent 4,279,710 presents an electrochemical method and associated apparatus for gasification of carbonaceous materials to carbon dioxide with the attendant formation of fuels of high-energy intermediates, such as hydrogen or light hydrocarbons, and production of electric power. No particular catalyst systems are disclosed.

U.S. Patent 4,235,863 considers a method of producing hydrogen in an electrolytic system using a hydride-forming liquid metal, such as liquid lithium or liquid sodium, the resulting hydride being thermally decomposed to produce hydrogen.

U.S. Patent 4,182,662 relates to a method of forming hydrogen by electrolysis in a cell containing an aqueous acid solution. Catalysts used are graphitized carbon, ruthenized titanium or platinized titanium.

U.S. Patent 4,395,316 is an improvement on the process of U.S.P. 4,341,608, which used an anode of lead-rich ruthenium polychlore compounds.

In U.S. Patent 4,311,569, an improved catalytic anode of a ternary platinum group reduced metal oxide is used alone or in combination with platinum group metals and/or platinum group metal oxides or mixtures having at least one valve-metal component, such as titanium, hafnium, zirconium, niobium, tantalum, and tungsten, in a process for electrolytically generating oxygen. The invention of U.S. Patent 4,457,824 is an improvement on the same method. In these two patents, the catalysts are in the electrodes, and thus are not available in solution for homogenous oxidation of any dissolved organics. Oxidation of organic materials using catalytic electrodes is not shown or suggested.

U.S. Patent 4,433,871 provides an electrolytic cell for production of hydrogen and oxygen using alkaline aqueous electrolyte and a vanadium addition agent to reduce the operating voltage.

US-A-4312721 describes the use of cobalt and silver ions as catalysts for the oxydation of cerium (III) to cerium (IV) at an anode.

GB-A-2106936 relates to a method of electrochemical gasification of a carbonaceous material in an aqueous acidic electrolyte by anodic oxidation at the anode of an electrolysis cell in which it is provided to add iron or a mixture thereof to the electrolyte.

The Journal of the Electrochemical Society vol. 129, N° 8 August 1982 pages 1719-1724 Manchester,

New Hampshire USA describes coal slurry oxidation mechanisms in particular it is stated that coal is catalytically oxidized in the solution by the Fe (III) extracted which in turn is oxidized by the electrode at an applied potential.

## Summary of the Invention

An object of the present invention is to provide an electrocatalytic reactor system in which organic waste material is oxidized using a catalyst/cocatalyst combination in an electrolyte in an electrochemical cell, hydrogen being generated or metal electrowon at the cathode. The over-all reactions in the anode half-cell and in the cathode half-cell are:

$$\text{Anode: } C + 2H_2O \xrightarrow{\text{catalyst}} CO_2 + 4H^+ + 4e^-$$

$$\text{Cathode: } 2H^+ + 2e^- \longrightarrow H_2$$

or

$$M^{+n} + ne^- \longrightarrow M$$

The process employs one of several electrocatalysts together with one of several homogeneous cocatalysts to improve the organic oxidation rate and to lower the activation energy for the oxidation of the organic waste material.

Another object of the invention is to produce hydrogen or electrowin metals at the cathode of an electrochemical cell in which electrolyte is in admixture with organic waste material. A further object of the invention is to provide a novel catalyst/cocatalyst composition of matter. A still further object of the invention is to provide a method of using the catalyst/cocatalyst composition of the invention for the treatment of organic waste material, for the production of hydrogen, or for the electrowinning of metals. Yet another object of the invention is to provide an electrolyte composition comprising organic waste material, a conductive electrolyte, catalyst and cocatalyst.

The present invention relates to a method for treating organic material comprising combining organic waste material with an electrolyte and a catalyst combination comprising :

a) an electrocatalyst, and

b) a homogeneous cocatalyst,

wherein the electrocatalyst is a member selected from the group consisting of cerium (4+) complex, iron (3+) complex, bromine and iodine and the homogeneous cocatalyst is a member selected from the group consisting of platinum (4+) ion complex, ruthenium (3+) ion complex, rhodium (3+) ion complex, nickel (2+) ion complex, cobalt (2+) ion complex, palladium (2+) ion complex and vanadium (5+) oxide complex and maintaining an electric potential across an anode and a cathode in an electrochemical cell containing the electrolyte and the catalyst combination, whereby positively charged ions are reduced at the cathode during the electrocatalytic, or mediated process, said positively charged ions comprising at least one member selected from the group consisting of hydrogen ions and metal ions.

The method of said invention comprises :

- admixing the organic material with an electrolyte and catalyst composition in the electrochemical cell ;
- separating the anode from the cathode in the electrochemical cell by interposing an ion specific membrane therebetween ;
- treating the organic material in a tank, circulating an electrolyte solution containing the catalyst combination in reduced form to the electrochemical cell for reoxidation of the electrocatalyst and homogeneous cocatalyst, and recirculating the electrolyte containing electrocatalyst and homogeneous cocatalyst to the tank for treating organic material ;
- separating the anode and the cathode in the electrochemical cell by interposing a semipermeable membrane therebetween ;
- dissolving the catalyst combination in its reduced form or oxidized form in the electrolyte solution ;
- to carry out the method at 0° C to 500° C.

The method of the present invention is characterized in that :

- the anode or other suitable electrode material is constructed of a material selected from the group consisting of platinum, platinum-doped carbon, platinum-clad titanium, niobium, graphite, reticulated

vitreous carbon and platinum-plated reticulated vitreous carbon ;

- the cathode or other suitable electrode material is constructed of a material selected from the group consisting of platinum, platinum-plated reticulated vitreous carbon, platinum-doped carbon, platinum-clad titanium, niobium, nickel and nickel-doped carbon ;
- the anode is maintained at an operating potential of + 0.5 to 1.5 volt, versus that of the normal hydrogen electrode.

There are several distinct aspects of this invention :

a) a catalyst/cocatalyst composition,
b) use of (a) in a method of producing hydrogen or electrowinning metals electrolytically ,
c) use of (a) in a method of electrolytically treating organic waste material,
d) use of (a) to reduce potential and thus energy required to gasify organic waste material electrochemically and to produce hydrogen or electrowin metals,
e) an electrolyte composition comprising (a), and
f) a reaction medium composition comprising organic waste material in (e),

Component (a) is an indispensable subcombination of each of the other aspects of the invention. The dispersion of (a) throughout the electrolyte composition imparts homogeneity to the distribution of the cocatalyst and of the catalyst.

The benefits derived from the use of the catalyst/cocatalyst are many. The process for treating organic waste material significantly reduces the amount of the solids electrochemically, producing gaseous products and some residue; it minimizes the amount of waste material which must be dumped or otherwise disposed of. The production of hydrogen or electrowinning of metals (b) at reduced potentials is an energy saving, economical process.

Likewise, an increase in reaction rates using the catalyst/cocatalyst combination (a) provides energy- saving economy. A further advantage of (c) is that hydrogen is produced or metal electrowon at the same time that organic waste material is decomposed by catalytic electrochemical oxidation-reduction.

**Brief Description of the Drawings**

Figure 1 is a vertical sectional view of an electrochemical cell useful for practicing the invention.

Figure 2 is a cross-sectional view taken on the plane 2-2 of the cell of Figure 1.

Figure 3 is a vertical sectional view of apparatus in which the organic reaction area and electrochemical cell are separated.

**Detailed Description of the Invention**

In the process of the invention organic waste material is oxidized and hydrogen gas is generated or metal ions reduced to the metal in an electrolytic cell. At the cathode of the electrolytic cell, hydronium ion is reduced to hydrogen or metal ion is reduced to the metal. The reaction at the anode is mediated, or electrocatalytic, reaction in which the oxidized form of a reversible redox couple, produced at the anode, subsequently oxidizes carbon of the organic waste material. The products of the carbon oxidation are carbon oxides and the reduced form of the redox couple, which is reoxidized at the anode. The process described herein employs one of several electrocatalysts along with one of several homogeneous cocatalysts to improve the organic oxidation rate and to lower the activation energy required for the oxidation of the organic material. Obtained data show that the mechanism of the organic oxidation is changed by the homogeneous cocatalyst, which apparently forms an electron transfer complex involving the electrocatalyst. This results in improvement in reaction rate and lowering of activation energies.

The electron transfer complex must exist at least momentarily to account for increased oxidation rates and lowered activation energies of the reactions taking place. It is postulated that the oxidation mechanism involves a short-lived coordination complex between the organic compound and the homogeneous cocatalyst, such as that of platinum ions or palladium ions and the double bonds of organic compounds, e.g., Ziese's salt anion, the trichloro (ethylene) platinate (II) ion, which is stable in aqueous solution. Similar platinum-organic double-bond complexes are apparently formed in catalyst mixtures of this invention. The standard potential of the iron (II)/iron (III) redox couple in 1.0 M sulfuric acid is +0.69V. The standard potential of platinum (IV)/platinum (II) redox couple in 1.0 M sulfuric acid is also approximately +0.69V. Thus, the platinum (II) species is in equilibrium with the platinum (IV) species, iron (III) and iron (II), and can be considered to be complexes for at least short periods of time to organic double bonds or other appropriate functionality on the organic compounds. The increase in reaction rate produced by platinum, palladium, rhodium or ruthenium is due to the fact that the homogeneous cocatalyst/organic complexes are

more long-lived than the electrocatalyst/ organic complexes and thus are more efficient at transferring electrons. Lowered activation energies are accounted for by the lower activation energy necessary for formulation of the organic compound-homogeneous cocatalyst complex. The required supply of oxidizing electrons can be derived from direct reduction of the cocatalyst, followed by reoxidation by the electrocatalyst or by formation of a short-lived electrocatalyst/cocatalyst/organic complex in which the cocatalyst compound acts as a bridge to transfer an electron from the organic compound to the electrocatalyst. Thus, the electron transfer complex (ETC) involved in the oxidation forms spontaneously when the homogeneous cocatalyst is added to an electrolyte containing dissolved or suspended organic compounds which have functional groups or bonds capable of interacting with the cocatalyst. The relative weight ratios vary with the type of organic compound, the type of cocatalyst and the electrocatalyst. Preferred ranges of proportions for each component are relatively large amounts of organic material (an activity for the organic of 1 or more), a great concentration of the electrocatalyst (activity of 0.1 to 1.0 or more) and a smaller concentration of the cocatalyst compound (activity of 0.01 to 0.001 or less). The ETC is formed in an electrolyte which solvates the catalysts and at a temperature of 0°C or higher with an organic material with functionalities which can interact with the cocatalyst, and in the absence of any interfering conditions, such as species which tie up or precipitate the catalysts.

The electrocatalyst is obtained as pure catalyst, from various salts or compounds of the electrocatalyst, or from impurities in the organic material.

The acid solutions usually used in the catalytic system dissolve many metal oxides, sulfides, many metal salts, etc. If any of these compounds exist as impurities in the organic waste used in the reactor, they will be leached out by an acid solution. Iron is one of the most common metals found in sewage sludge, manure and many other biological wastes, and so can supply part or all of the electrocatalyst once leached from the organic material. Bromine or iodine found in sufficient quantity in some waste materials, particularly brominated or iodinated organics, can supply the particularly brominated or iodinated organics, to provide the necessary electrocatalyst concentration. The electrocatalyst is usually added to the electrolyte, as there is not enough normally found in waste materials to develop the desired reaction rate, but some waste materials supply their own electrocatalyst, e.g., when leachable iron, bromine or iodine is present in sufficient quantity in the waste material. It is doubtful that any waste material will contain sufficient quantities of copper, nickel, platinum, vanadium, etc., to supply their own cocatalyst as well, but such is not precluded. Whether the electrocatalyst and the cocatalyst are added as metals, metal salts, etc., or leached from the organic waste material does not affect the nature of the process described herein. The catalyst materials are identified by chemical analysis of the waste material to determine catalyst content (if any), and by chemical analysis of the electrolyte (after it has been thoroughly mixed with the waste and allowed to stand for, e.g., from 24 to 72 hours).

The homogeneous cocatalyst is optionally obtained from pure cocatalyst metal, from various salts or compounds of the cocatalyst, or from impurities in the organic material. The homogeneous cocatalyst is dissolved in or homogeneously distributed throughout the catalyst solution. This is advantageous in that it eliminates one heterogeneous step in the process of transfer of electrons from the electrocatalyst and in that the cocatalyst is available to the entire surface of any solid organic particles immersed in the catalyst solution. The cocatalyst is homogeneous with the electrocatalyst solution, it is a single ion complex (not an admixture), and the homogeneity of the cocatalyst is very critical to the increased reaction rates observed.

The employed electrolyte is any solution in which the electrocatalyst and cocatalyst are soluble at least in reduced form, but is typically a solution of a strong mineral acid, such as hydrochloric acid, phosphoric acid or sulfuric acid. The acid solution reduces the reduction potential necessary for hydrogen production, while providing a solubilizing medium for the catalyst composition. The system is satisfactorily operated at various temperatures, depending on the catalyst combination and the organic source; temperatures from 70°C to 200°C are typical. However, temperatures from 0°C to 500°C or more may be used.

The principle advantages of the process are threefold. Firstly, the process effects the oxidation (without burning, standard chemical oxidation or biological digestion) of most organic material directly to simple compounds. Chemical analysis of gaseous products and anolyte solutions after oxidation indicates that the process is clean and efficient, leaving little residue. Secondly, the process produces electrolytic hydrogen at a potential considerably below that necessary to crack water. The organic waste/electrocatalyst/homogeneous cocatalyst combination acts as a depolarizing agent to reduce the potential applied to the anode. Using this process, electrolytic hydrogen is produced from inexpensive organic waste material at much lower cost than was formerly possible. Thirdly, the process can be used to electrowin metals from solutions of their ions in the cathode half-cell at a potential considerable lower than with other processes, thus reducing cost for electrodeposition of many metals.

Examples of organic waste material or biomass suitable for practicing the invention are woody wastes,

cattle manure, sewage sludge, various industrial chemical wastes, food and fiber processing by-products or waste and grown biomass products, such as bulk grass plants, water plants, etc., any organic material which as a positive cost of disposal and which is generated or available in significant amounts, or any low cost source of organic material such as coal, peat, oil shale, etc.

Examples of catalyst compositions useful for practicing the invention are various combinations of metal ion complexes and/or oxidizing halogens. The complexes vary and depend upon the composition of the solution and the nature of the organic waste material. Non-limiting examples or electrocatalysts are cerium (4+) ion complex, iron (3+) ion complex, bromine and iodine. Non-limiting examples of homogeneous cocatalysts are platinum (4+) ion complex, ruthenium (3+) ion complex, rhodium (3+) ion complex, nickel (2+) ion complex, cobalt (2+) ion complex palladium (2+) ion complex, copper (2+) ion complex and vanadium (5+) oxide complex. The catalyst solutions are made by dissolving the halogen, metal, and/or soluble metal salt in an electrolyte solution. Useful combinations of electrocatalyst and homogeneous cocatalyst include:

| | |
|---|---|
| $iron^{3+}$ with $platinum^{4+}$ | (urea, wood cellulose, manure and/or fat) |
| $Iron^{3+}$ with $vanadium^{5+}$ | (sewage sludge) |
| bromine with $ruthenium^{3+}$ | (urea, wood cellulose and/or fat) |
| bromine with $vanadium^{5+}$ | (wood cellulose and/or manure) |
| $iron^{3+}$ with $cobalt^{2+}$ | (wood cellulose and/or manure) |
| iodine with $ruthenium^{3+}$ | (urea) |
| $iron^{3+}$ with $palladium^{2+}$ | (fat) |
| bromine with $palladium^{2+}$ | (fat) |
| $iron^{3+}$ with $nickel^{+2}$ | (manure) |

In practicing the invention, an electrolyte, an electrocatalyst and a homogeneous oxidation cocatalyst are combined for oxidizing organic waste material, for producing hydrogen (at the cathode of an electrochemical cell), and/or for electrowinning metals (at the cathode of an electrochemical cell).

Anode materials used in the invention are, for example, platinum, platinum-clad titanium, graphite, platinum-loaded graphite, reticulated vitreous carbon or platinum plated reticulated vitreous carbon. Suitable anode materials are those materials which do not corrode in the electrolyte and at which the electrode-catalyst redox pair is reversible or quasi-reversible.

Suitable cathode materials are, for example, nickel mesh, platinum-clad titanium, platinum-loaded graphite, or platinum plated reticulated vitreous carbon. Other suitable cathode materials are materials which do not corrode in the electrolyte and at which the hydronium-hydrogen redox couple is reversible or quasi-reversible.

The electrolyte is, for example, hydrochloric or sulfuric acid in concentrations varying from 1.0M to 6.0 M, or potassium sulfate at 0.2M. Other useful electrolytes are those which possess the necessary conductivity, dissolve at least the reduced form of the catalyst, and do not interfere with or poison the catalyst. The electrolyte is made by diluting the concentrated sulfuric acid, hydrochloric acid or potassium sulfate crystals with water of reasonable purity, e.g., distilled water, deionized water or tap water.

The electrolyte solution optionally has many different compositions. Various other acids which are suitable electrolytes are perchloric acid, hydrobromic acid, hydriodic acid, nitric acid, boric acid, hydrofluoric acid, or any other strong acid which is not irreversibly degraded in the system. There are a variety of salts which are suitable electrolytes, including sodium or potassium chloride, bromide or iodide, iron chloride, bromide or iodide, sodium or potassium phosphate, sodium sulfate, any of the alkali-metal fluorides, any of the alkali or alkaline-earth nitrates or perchlorates, iron nitrate, iron perchlorate, any of the soluble borate salts, any of the soluble aluminum or ammonium salts and any other electrolyte salt or salt mixture which is not irreversibly degraded in the system. The important attributes of the electrolyte are that it is able to solvate at least the reduced form of the electrocatalyst, that it provides a low-resistivity medium between the electrodes and that it does not degrade in the oxidation system.

The operating potential of the system is dependant on the electrocatalyst and the electrolyte. The electrolyte, because of its relatively high concentration, generally determines the form of the electrocatalyst complex (if any), and can shift the redox potential of the electrocatalyst by several tenths of a volt. For iron (3+) in 1.0 M phosphoric acid, the standard redox potential is +0.49 volt, and the cell anode is operated at any potential from +0.5 to +1.5 volts or more, versus the normal hydrogen electrode (NHE).

The normal hydrogen electrode (NHE) is an imaginary electrode at which the $H^+/H_2$ redox reaction is perfectly reversible, and which is suspended in solution where the activity of the hydrogen cation is 1.0 and where hydrogen gas at 1.0 atmosphere (activity = 1.0) is bubbled over the electrode surface. The potential of this electrode is defined to be 0.000V, and is the standard of reference for redox potentials of other species. In practice, the electrode is approximated by a piece of platinized platinum (platinum covered with

platinum black) in an acid solution of $H^+$ activity 1.0, while hydrogen gas at 1.0 atmosphere is bubbled over the surface ($H_2$ activity + 1.0).

The preferred operating range for iron (3+) in phosphoric acid is +0.5 to +0.8 volt. For iron (3+) in 1.0 M sulfuric acid, the standard redox potential is +0.69 volt, and the cell anode is suitably operated at any potential from +0.70 to +1.5 volts or more, versus the NHE. The preferred potential range at the anode for iron (3+) in sulfuric acid solution is +0.7 to +1.0 volt. For bromine, the standard redox potential is +1.087 volts, and the cell anode is effectively operated at any potential from +1.0 to +1.5 volts or more, versus the NHE. Preferred potential range for bromine is from +1.0 to +1.2 volts versus the NHE. For iodine, the standard redox potential is approximately +0.47 volt, and the cell anode is operated at any potential from +0.5 to +1.5 volts or more, versus the NHE. The preferred potential range for iodine is from +0.50 to +0.70 volt.

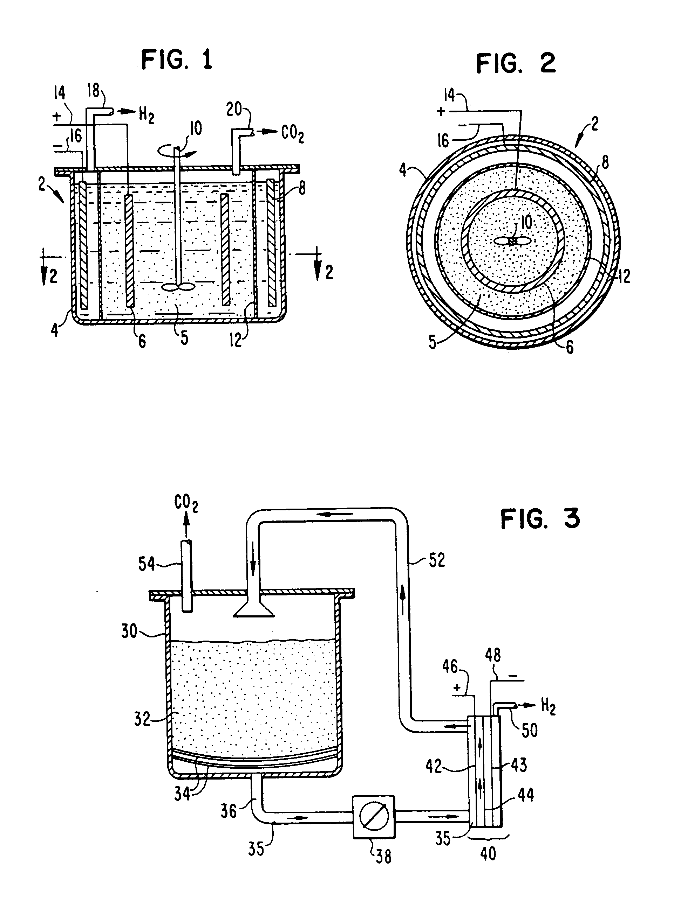

Referring now to the Figures, Figure 1 shows an electrochemical cell 2 suitable for practicing the invention. Tank 4 contains electrolyte 5 in which anode 6 and stirrer 10 are immersed. Electrolyte 5 is an electrolyte containing electrocatalyst and homogeneous cocatalyst together with the organic waste material. Anode 6 and cathode 8 are separated by an ion specific or semipermeable membrane 12. Anode 6 is connected to lead 14 and cathode 8 is connected to lead 16. Leads 14 and 16 are connected to source of electric current (not shown). Hydrogen generated in the cathode compartment is removed through conduit 18, and carbon dioxide generated in the anode compartment is removed through conduit 20. Figure 2 is a top view of the electrochemical cell 2, showing circular anode 6, circular cathode 8 and anode electrolyte solution 5 containing the electrolyte, electrocatalyst and homogeneous cocatalyst, together with the organic waste material. Ion specific or semi-permeable membrane 12 is shown as a circular separator between the anode and cathode compartments. Figure 3 shows tank 30 which contains a mixture 32 of electrolyte, electrocatalyst, homogeneous cocatalyst and organic waste material resting on optional filter screen 34. Organic waste material is reacted with electrolyte and catalyst combination in tank 30, and electrolyte solution 35 flows through exit 36 via pump 38 to electrochemical cell 40, which contains electrolyte solution 35 in which anode 42 is immersed. Anode 42 and cathode 43 are separated by ion specific or semi-permeable membrane separator 44. Anode 42 is connected to lead 46, and cathode 43 is connected to lead 48. Leads 46 and 48 are connected to a source of electric current (not shown). Hydrogen generated at the cathode is led off at exit 50. Solution from the anode compartment is returned by conduit 52 to tank 30 for reuse. Carbon dioxide generated in tank 30 is withdrawn therefrom through conduit 54. Waste material in tank 30 is mixed with catalyst solution by percolation, spraying, stirring, density gradient or other method. Catalyst which is reduced in tank 30 is reoxidized in electrochemical cell 40 before being returned to tank 30.

The electrocatalyst is regenerated from the reduced form by oxidation at the anode. There may be some reoxidation of reduced cocatalyst at the anode, but this is minimal compared with the reoxidation of the electrocatalyst since the cocatalyst is largely not consumed.

The electrochemical cells shown in Figures 1 to 3 are non-limiting examples of the invention. The electrochemical cell may be configured as a cylinder, a sphere or other appropriate shape. The anode compartment is alternatively the inner compartment, the outer compartment, or either compartment in a cell in which the electrodes are planar. The separator is, optionally, an ion-specific membrane or any semipermeable barrier.

Suitable ion-specific membranes include cation-specific membranes, for example, Ionics 61 CZL-386 and Nafion 423. The semi-permeable membrane is, e.g., a microporous plastic, sintered (fritted) glass, a gel, such as agar, or any other material which restricts fluid flow and does not allow intimate mixing of the anolyte and catholyte. Either an ion-specific of a semi-permeable membrane may be used, but the use of ion-specific membranes leads to higher electrochemical cell efficiency since they strongly limit the diffusion of the electrocatalyst between the catholyte and the anolyte. Semi-permeable membranes are generally less expensive but do not provide as much of a barrier to electrocatalyst diffusion, thus lowering the efficiency of the electrochemical cell in comparison with a cell using an ion specific membrane.

Other operating limitations are principally imposed by the materials used in construction of the reactor system. The system may be built of very inert, strong, expensive materials, such as a quartz-lined steel, and operated at relatively high temperatures (100° to 500°C or more) or it may be made from inexpensive materials, such as polypropylene or polyethylene and ordinary glass, and operated at temperatures of 20°C to 120°C. Electrode materials must not corrode at the operating temperature of the electrochemical cell. Another limitation is the necessity to operate below the critical temperature of the electrolyte solution being used.

Elevated temperatures are used when oxidizing a refractory organic compound, such as lignin, chitin or a saturated aliphatic hydrocarbon; or when excess heat energy is available at low cost and a lower redox

potential electrocatalyst (for example, iron in phosphoric acid, or iodine) can be used to reduce electrical costs. While a lower-potential electrocatalyst has an unacceptable reaction rate at, e.g., 70°C, it is not precluded from oxidizing the organic compound at an adequate rate at, e.g., 250°C. The pressure in the system may vary and is dependent on the nature of the electrolyte and the electrocatalyst. A concentrated sulfuric acid solution, does not reach one atmosphere (14.7 psia) pressure until 330°C, and concentrated phosphoric acid has a similar low pressure at elevated temperature. The reaction may be run in molten salt electrolyte at elevated temperatures with no significant overpressure in the reactor.

Potential applied to the anode is kept as low as possible to maximize the energy efficiency of the system. An increase in temperature increases the reaction rate and reduces the necessary size of the reactor for oxidizing a given amount of organic waste material in applications where space is at a premium or rapid oxidation is desired. Operating the anode at a higher potential drives the reaction more quickly but is of limited utility beyond about 0.2 to 0.3 volt more (positive) than the electrocatalyst redox potential. The acidity of the electrolyte solution affects the reaction rate by aiding in the decomposition of the organic waste compounds due to dehydration and other acid catalyzed reactions. With woody organic waste material greater acid concentrations are particularly effective in increasing the electrocatalytic oxidation reaction rate, due to breakdown of the cellulose chains.

For hydrogen production or metal electrowinning maximum energy efficiency must be achieved with the given organic waste material used. The reactions at the anode and cathode must be as reversible as possible, so that little overpotential is needed. Preferred materials for the cathode are platinum, platinum-loaded carbon, platinum-clad titanium, platinum-clad niobium, nickel or nickel-loaded carbon. Platinum, platinum-clad titanium or niobium, platinum-loaded carbon or carbon are preferred materials for the anode. The preferred electrolyte solution depends on the electrocatalyst used and the type of organic waste material. Several satisfactory combinations (useful for hydrogen production) are exemplified below:

0.1 M iron (3+)/0.1 M cobalt (2+)/wood cellulose/6M sulfuric acid;
0.1 M iron (3+)/0.01 M vanadium (V)/sewage sludge/6M sulfuric acid;
0.1 M bromine/0.01 M vanadium (5+)/wood cellulose or manure/6M sulfuric acid;
0.01 M bromine/0.001 M ruthenium (3+)/urea, cellulose or fat/6M sulfuric acid; and
0.1 M iron (3+)/0.001 M platinum (4+)/urea, cellulose or fat/6M sulfuric acid.

The operating potential of the anode is maintained at +0.7 to +0.1 volt versus the NHE, and temperatures of operation are typically from 20°C to 200°C. With more inert, stronger materials of construction for the apparatus the operating temperature may be 500°C or more. Lower temperatures require less energy expended in heating the system.

For oxidative degradation of organic waste material, catalyst and reactor conditions are chosed to insure maximum conversion of the organic waste to an easily disposable form. Strong acid solution (1.0 M or more) and active catalysts are selected. Useful combinations for oxidative degradation include:

0.2 M iron (3+)/0.001 M platinum (4+)/fats, wood cellulose or sewage sludge/6M hydrochloric acid;
0.01 M bromine/0.001 M ruthenium (3+)/urea, fats, or wood cellulose/6M sulfuric acid;
0.01 Mbromine/0.01M vanadium (5+)/wood cellulose or manure/6M sulfuric acid;
0.01 M iron (3+)/0.01 Mvanadium (5+)/sewage sludge/6M hydrochloric or sulfuric acid; and
cerium (4+)/platinum (4+)/fats, wood cellulose and many other organics/6M sulfuric or hydrochloric acid.

The temperature of the reactor should preferably be maintained at 100°C or more for most applications, but for some materials, such as urea, a lower reaction temperature is suitable. The cathode material is suitably platinum, nickel or nickel-plated carbon as well as a variety of other metals or electrode materials with relatively low hydrogen overpotential. The anode material may be platinum, carbon, platinum-loaded carbon, platinum-clad titanium or noibium, or any other electrode material which does not corrode in the catalyst solution and has a relatively low overpotential for the electrocatalyst oxidation. The operating potential is similar to that discussed above for hydrogen production.

The three applications of the process, for hydrogen production, electrowinning, and for oxidation or organic waste material, are considered to be independent applications. Table I, below, tabulates non-limiting examples of organic material, electrocatalyst, homogeneous cocatalyst, electrolyte, reaction rate, and activation energy, particularly pointing out the advantageous effect when a homogeneous cocatalyst is used in combination with an electrocatalyst contrasted with the use of the electrocatalyst alone. The reaction rate is significantly increased using the combination of the electrocatalyst and homogeneous cocatalyst of the invention.

In practicing the invention, the mechanism of organic oxidation is changed by addition of the homogeneous cocatalyst to the electrocatalyst and by formation of an electron transfer complex involving the electrocatalyst, homogeneous cocatalyst and the organic waste material. The electron transfer complex

has not been characterized but its presence is demonstrated by the reduced activation energies and/or increased reaction rates in the presence of homogeneous cocatalyst as opposed to use of the electrocatalyst alone, as shown in Table I. The use of the combination of electrocatalyst and homogeneous cocatalyst of the invention results in the increase in reaction rate and a decrease in activation energies.

The invention is further illustrated by the following examples in which all parts and percentages are by weight unless otherwise indicated. These non-limiting examples are illustrative of certain embodiments designed to teach those skilled in the art of how to practice the invention and represent the best mode contemplated for carrying out the invention.

Table 1

| Organic | Electrocatalyst | Homogeneous Cocatalyst | Electrolyte | Reaction Rate ($sec^{-1}$) | $E_A$ (kcal/mole) |
|---|---|---|---|---|---|
| wood cellulose | iron (III) | none | 6. M $H_2SO_4$ @ 50°C | $1.4 \times 10^{-6}$ | 12. |
| wood cellulose | iron (III) | cobalt (II) | 6. M $H_2SO_4$ @ 50°C | $4.1 \times 10^{-6}$ | 11.3 |
| wood cellulose | iron (III) | platinum (IV) | 6. M $H_2SO_4$ @ 50°C | $3.6 \times 10^{-6}$ | 8.1 |
| beef fat | iron (III) | none | 1.0 M $H_2SO_4$ @ 20°C | $<1 \times 10^{-9}$ | -- |
| beef fat | iron (III) | platinum (IV) | 1.0 M $H_2SO_4$ @ 20°C | $4.7 \times 10^{-7}$ | 4.5 |
| beef fat | iron (III) | palladium (II) | 1.0 M HCl @ 20°C | $2.2 \times 10^{-6}$ | -- |
| urea | iron (III) | none | 1.0 M $H_2SO_4$ @20°C | $4. \times 10^{-9}$ | -- |
| urea | iron (III) | ruthenium (III) | 1.0 M $H_2SO_4$ @ 20°C | $2.2 \times 10^{-8}$ | -- |
| urea | iron (III) | platinum (IV) | 1.0 M $H_2SO_4$ @ 20°C | $1.2 \times 10^{-6}$ | 4.8 |
| urea | iodine | none | 1.0 M $H_2SO_4$ @ 20°C | $<1 \times 10^{-9}$ | -- |
| urea | iodine | ruthenium (III) | 1.0 M $H_2SO_4$ @ 20°C | $5. \times 10^{-9}$ | -- |
| urea | bromine | none | 1.0 M $H_2SO_4$ @ 20°C | $2.0 \times 10^{-5}$ | |
| urea | bromine | ruthenium (III) | 1.0 M $H_2SO_4$ @ 20°C | $2.6 \times 10^{-4}$ | 8.6 |
| cellulose | bromine | none | 0.2 M $K_2SO_4$ @ 20°C | $1.6 \times 10^{-6}$ | |
| cellulose | bromine | platinum (IV) | 0.2 M $K_2SO_4$ @ 20°C | $2.9 \times 10^{-6}$ | -- |
| cellulose | bromine | rhodium (III) | 0.2 M $K_2SO_4$ @ 20°C | $8.6 \times 10^{-6}$ | -- |
| cellulose | bromine | ruthenium (III) | 0.2 M $K_2SO_4$ @ 20°C | $1.7 \times 10^{-5}$ | 12. |

Table 1, continued

| Organic | Electrocatalyst | Homogeneous Cocatalyst | Electrolyte | Reaction Rate ($sec^{-1}$) | $E_A$ (kcal/mole) |
|---|---|---|---|---|---|
| cellulose | bromine | none | 6.0 $\underline{M}$ $H_2SO_4$ @ 50°C | $1.6 \times 10^{-5}$ | |
| cellulose | bromine | vanadium (V) | 6.0 $\underline{M}$ $H_2SO_4$ @ 20°C | $4.7 \times 10^{-5}$ | 11.4 |
| cellulose | none | vanadium (V) | 6.0 $\underline{M}$ $H_2SO_4$ @ 20°C | $<1. \times 10^{-6}$ | -- |
| fat | bromine | none | 0.2 $\underline{M}$ $K_2SO_4$ @ 20°C | $1.9 \times 10^{-6}$ | |
| fat | bromine | palladium (II) | 0.2 $\underline{M}$ $K_2SO_4$ @ 20°C | $2.9 \times 10^{-6}$ | -- |
| fat | bromine | ruthenium (III) | 0.2 $\underline{M}$ $K_2SO_4$ @ 20°C | $9.3 \times 10^{-6}$ | 11.1 |
| cattle manure | iron (III) | none | 6.0 $\underline{M}$ $H_2SO_4$ @ 50°C | $4.0 \times 10^{-7}$ | |
| cattle manure | iron (III) | platinum (IV) | 6.0 $\underline{M}$ $H_2SO_4$ @ 50°C | $1.1 \times 10^{-6}$ | |
| cattle manure | iron (III) | cobalt (II) | 6.0 $\underline{M}$ $H_2SO_4$ @ 50°C | $1.2 \times 10^{-6}$ | 8.0 |
| cattle manure | iron (III) | nickel (II) | 6.0 $\underline{M}$ $H_2SO_4$ @ 50°C | $8.0 \times 10^{-7}$ | -- |
| cattle manure | bromine | none | 6.0 $\underline{M}$ $H_2SO_4$ @ 50°C | $7.6 \times 10^{-6}$ | |
| cattle manure | bromine | vanadium (V) | 6.0 $\underline{M}$ $H_2SO_4$ @ 50°C | $1.1 \times 10^{-5}$ | |
| sewage sludge | iron (III) | none | 6.0 $\underline{M}$ $H_2SO_4$ @ 50°C | $1.2 \times 10^{-6}$ | |
| sewage sludge | iron (III) | vanadium (V) | 6.0 $\underline{M}$ $H_2SO_4$ @ 50°C | $3.8 \times 10^{-6}$ | |

## EXAMPLES

Example 1:

A catalyst solution of 1.0 M sulfuric acid containing 0.1 M iron (III) and 0.001 M platinum (IV) is prepared by diluting 0.055 liter of concentrated sulfuric acid, 20 grams of iron (III) sulfate, and 0.410 grams of chloroplatinic acid to one liter with water. 70 Grams of urea are then added to the solution. The solution is stirred to dissolve the salts and 600 ml of solution is transferred to the anode half-cell of Figure 1; a solution of 1.0 M sulfuric acid is added to the cathode half-cell. These two solutions are the anolyte and the catholyte, respectively. The anode is a platinum-clad titanium wire mesh formed into a cylindrical shape, and the cathode is a cylindrical shape formed of fine nickel wire mesh. Both electrodes are totally immersed in solution. A Teflon-coated stirring bar is used to agitate the solution in the anode half-cell, and an Ionics 61 CZL-386 cation-specific membrane is used to separate the two half-cells. The cell is sealed and maintained at 30°C, and a D.C. potential of approximately 1.0V is applied across the electrodes, resulting in a current of 7 mA. After a 100 hour test period, the hydrogen generated is purged and analyzed by gas chromatography, giving a hydrogen generation efficiency value of 99%, approximately 20% of the urea being consumed. For the anode half-cell solution reaction, the reaction rate constant is $1.2 \times 10^{-6}$ $sec^{-1}$ and the activation energy is 4.8 kcal/mole.

Example 2:

The reactor tank of Figure 3 is loaded with a supported bed of 500 grams of wood chips over filters of 1.0 mm and 0.25 mm Teflon screen. A solution of 6.0 M sulfuric acid containing 0.2 M iron (III) and 0.01 M cobalt (II) is prepared by diluting 3.3 liters of concentrated sulfuric acid, 400 grams of iron (III) sulfate and 15.5 grams of cobalt (II) sulfate to 10 liters with water. The solution is agitated to dissolve the salts and then transferred into the reactor tank. The electrodes in the electrochemical cell are a 20 pores/inch reticulated vitreous carbon (RVC) anode and a platinum-plated 20 pores/inch RVC cathode, separated by a Nafion 423 cation-specific membrane. A potential of 1.0 volt is applied across the electrodes. The reactor tank is sealed, and the catalyst solution is pumped from the tank through electrochemical cell and back into the tank. The reactor tank is heated to about 80°C giving a current level of 0.5 to 2.0 amperes. The reaction tank volume is about twice the volume of the solution in liters, the reaction rate is about $1 \times 10^{-5}$ $sec^{-1}$ and the activation energy is 11.3 kcal/mole. The electrochemical cell is operated at more than 95 percent efficiency, and about 13 cubic feet of hydrogen is produced, as determined by gas chromatographic analysis during 100 hours of operation.

Example 3:

A catalyst solution of $1.0 \times 10^{-3}$ M bromine (as $Br_2$) and $1.0 \times 10^{-3}$ M ruthenium (III) is prepared by diluting 27.5 ml of concentrated sulfuric acid, 0.05 ml of bromine liquid and 0.21 grams of ruthenium (III) chloride to one liter with water. A 600 ml portion of this solution is transferred to the anode half-cell of Figure 1, and a solution of 0.5 M sulfuric acid is added to the cathode half-cell. The anode is a platinum-clad titanium wire mesh formed into a cylindrical shape, and is totally immersed in the solution in the anode half-cell. The cathode is a cylinder formed of fine nickel wire mesh, and is totally immersed in the solution in the cathode half-cell. A Teflon-coated stirring bar is used to agitate the solution in the anode half-cell, and an Ionics 61 CZL-386 cation-specific membrane is used to separate the two half-cells. Approximately 6 grams of fat is added to the anode half-cell, following which the cell tank is sealed and heated to 70°C. A D.C. potential of approximately 1.25V is applied across the electrode, giving a resultant steady state current of approximately 15 milliamperes (Reaction rate constant = $2.6 \times 10^{-4}$ $sec^{-1}$, activation energy = 11 kcal/mole). Pure carbon dioxide is produced in the anode half-cell at almost 100 percent efficiency.

Example 4:

A catalyst solution of 1.0M sulfuric acid containing 0.01 M cobalt (II) and 1.0 M iodine is prepared by diluting 0.055 liter of concentrated sulfuric acid, 1.57 g. cobalt (II) sulfate and 12.7 g. iodine crystals to one liter with water. The reactor cell of Figure 1 is loaded with 15 g. of potato starch in the inner (anode) chamber. The catalyst solution is added to the outer (cathode) chamber. Each electrode is platinum-clad titanium mesh formed into a cylinder, and the half-cells are separated by a supported Nafion 423 cation-specific membrane. The reactor cell is sealed and heated to 120°C, and a potential of +0.70 volts is applied to the anode versus the cathode. The resulting reaction rate is approximately $1.7 \times 10^{-5}$ $sec^{-1}$, with the iodine/starch reaction activation energy

TABLE II

EXAMPLES OF SYSTEMS AT HIGHER TEMPERATURES

| Electrocatalyst | Cocatalyst | Electrolyte Medium | Temperature | Pressure |
|---|---|---|---|---|
| 0.2 M Iron (III) | 0.001 M Platinum (IV) | 6 M $H_2SO_4$ | 100.°C | <15 psia |
| 0.2 M Iron (III) | 0.01 M Cobalt (II) | $H_2SO_4$ | 330.°C | ~15 psia |
| 0.2 M Iron (III) | 0.01 M Vanadium (V) | $H_3PO_4$ | 200.°C | <15 psia |
| Bromine | 0.01 M Vanadium (V) | HBr | 225.°C | ~2000 psia |
| 0.2 M Iron (III) | 0.001 M Platinum (IV) | $AlCl_3$ | 200.°C | ~40 psia |
| Bromine | 0.001 M Ruthenium (III) | 6 M $H_2SO_4$ | 110.°C | ~30 psia |
| Iodine | 0.01 M Copper (I) | $H_2SO_4$ | 265.°C | ~75 psia |
| 0.2 M Cesium (IV) | 0.001 M Palladium (II) | 6 M NaCl | 225.°C | ~300 psia |

equal to 13.2 kcal/mole. About $1.7 \times 10^{-5}$ moles hydrogen/second are produced at the cathode, at an efficiency of nearly one hundred percent. The starch is consume in a little over eight hours.

Further examples of systems operated at higher temperatures are shown in Table II.

Variations and modifications may be effected within the scope of the invention as described above, and as defined in the appended claims. Throughout the disclosure and claims all references to "homogeneous

cocatalyst" mean that the cocatalyst is substantially uniformly dispensed throughout the electrolyte.

## Claims

1. A method for treating organic material comprising combining organic waste material with an electrolyte and a catalyst combination comprising :
   a) an electrocatalyst, and
   b) a homogeneous cocatalyst,
   wherein the electrocatalyst is a member selected from the group consisting of cerium (4+) complex, iron (3+) complex, bromine and iodine and the homogeneous cocatalyst is a member selected from the group consisting of platinum (4+) ion complex, ruthenium (3+) ion complex, rhodium (3+) ion complex, nickel (2+) ion complex, cobalt (2+) ion complex, palladium (2+) ion complex and vanadium (5+) oxide complex and maintaining an electric potential across an anode and a cathode in an electrochemical cell containing the electrolyte and the catalyst combination, whereby positively charged ions are reduced at the cathode during the electrocatalytic, or mediated process, said positively charged ions comprising at least one member selected from the group consisting of hydrogen ions and metal ions.

2. A method according to claim 1, characterized in that it comprises admixing the organic material with an electrolyte and catalyst composition in the electrochemical cell.

3. A method according to claim 1, characterized in that it comprises separating the anode from the cathode in the electrochemical cell by interposing an ion specific membrane therebetween.

4. A method according to claim 1, characterized in that it comprises treating the organic material in a tank, circulating an electrolyte solution containing the catalyst combination in reduced form to the electrochemical cell for reoxidation of the electrocatalyst and homogeneous cocatalyst, and recirculating the electrolyte containing electrocatalyst and homogeneous cocatalyst to the tank for treating organic material.

5. A method according to claim 1, characterized in that it comprises separating the anode and the cathode in the electrochemical cell by interposing a semipermeable membrane therebetween.

6. A method according to claim 4, characterized in that it comprises dissolving the catalyst combination in its reduced form or oxidized form in the electrolyte solution.

7. A method according to claim 1, characterized in that it is carried out at 0° C to 500° C.

8. A method according to claim 1, characterized in that the anode is maintained at an operating potential of + 0.5 to 1.5 volt, versus that of the normal hydrogen electrode.

## Patentansprüche

1. Verfahren zur Behandlung organischer Stoffe, bei dem organische Abfallstoffe mit einem Elektrolyten und einer Katalysatorzusammensetzung zusammengebracht werden, die
   a) einen Elektrokatalysator und
   b) einen homogenen Cokatalysator
   umfaßt,
   worin der Elektrokatalysator ausgewählt wird unter Cer(IV)-Komplexen, Eisen(III)-Komplexen, Brom und Iod und der homogene Cokatalysator ausgewählt wird unter Platin(IV)-Ionenkomplexen, Ruthenium(III)-Ionenkomplexen, Rhodium(III)-Ionenkomplexen, Nickel(II)-Ionenkomplexen, Kobalt(II)-Ionenkomplexen, Palladium(II)-Ionenkomplexen und Vanadium(V)-Oxid-Komplexen, wobei in einer elektrochemischen Zelle, die den Elektrolyten und die Katalysatorzusammensetzung enthält, ein elektrisches Potential über eine Anode und eine Kathode aufrechterhalten wird, wobei positiv geladene Ionen während des elektrokatalytischen oder mittelbaren Prozesses an der Kathode reduziert werden und die positiv geladenen Ionen mindestens unter Wasserstoffionen oder Metallionen ausgewählt sind.

2. Verfahren nach Anspruch 1,

dadurch gekennzeichnet, daß
der organische Stoff in der elektrochemischen Zelle mit einem Elektrolyten und einer Katalysatorzusammensetzung gemischt wird.

**3.** Verfahren nach Anspruch 1,
dadurch gekennzeichnet, daß
in der elektrochemischen Zelle die Anode von der Kathode durch Einsetzen einer ionenspezifischen Membran zwischen diese getrennt ist.

**4.** Verfahren nach Anspruch 1,
dadurch gekennzeichnet,
daß der organische Stoff in einem Behälter behandelt wird, eine die Katalysatorzusammensetzung in reduzierter Form enthaltende Elektrolytlösung zur Reoxidation des Elektrokatalysators und des homogenen Cokatalysators der elektrochemischen Zelle zugeführt und der den Elektrokatalysator und den homogenen Cokatalysator enthaltende Elektrolyt zur Behandlung der organischen Stoffe zum Behälter rückgeführt wird.

**5.** Verfahren nach Anspruch 1,
dadurch gekennzeichnet, daß
in der elektrochemischen Zelle die Anode und die Kathode durch Einsetzen einer semipermeablen Membran zwischen diese getrennt sind.

**6.** Verfahren nach Anspruch 4,
dadurch gekennzeichnet, daß
die Katalysatorzusammensetzung in der reduzierten Form oder oxidierten Form in der Elektrolytlösung aufgelöst wird.

**7.** Verfahren nach Anspruch 1,
dadurch gekennzeichnet, daß
es bei 0 °C bis 500 °C durchgeführt wird.

**8.** Verfahren nach Anspruch 1,
dadurch gekennzeichnet, daß
die Anode bei einem Arbeitspotential von + 0,5 bis 1,5 Volt gegen die Normalwasserstoffelektrode gehalten wird.

**Revendications**

**1.** Procédé pour traiter des matières organiques, comprenant la combinaison d'une matière de déchet organique avec un électrolyte et une combinaison de catalyseur comprenant:
a) un électrocatalyseur, et
b) un co-catalyseur homogène,
dans lequel l'électrocatalyseur est choisi parmi le groupe comportant un complexe de cérium (4+), un complexe de fer (3+), le brome et l'iode et le co-catalyseur homogène est choisi parmi le groupe comportant un complexe d'ion platine (4+), un complexe d'ion ruthénium (3+), un complexe d'ion rhodium (3+), un complexe d'ion nickel (2+), un complexe d'ion cobalt (2+), un complexe d'ion palladium (2+), et un complexe d'oxyde de vanadium (5+), et où l'on maintient une différence de potentiel électrique entre une anode et une cathode dans une cellule électrochimique contenant l'électrolyte et la combinaison de catalyseur, les ions chargés positivement étant réduits à la cathode durant l'électrocatalyse ou le processus avec médiateur, lesdits ions positifs comprenant au moins un membre du groupe comportant les ions hydrogène et les ions métalliques.

**2.** Procédé selon la revendication 1,
caractérisé en ce qu'il comprend le mélange de la matière organique avec un électrolyte et la composition de catalyseur dans la cellule électrochimique.

**3.** Procédé selon la revendication 1,
caractérisé en ce que l'on sépare l'anode de la cathode dans la cellule électrochimique en interposant

entre elles une membrane spécifique à l'égard des ions.

**4.** Procédé selon la revendication 1,
caractérisé en ce qu'on traite la matière organique dans un réservoir, on fait circuler vers la cellule électrochimique une solution d'électrolyte contenant la combinaison de catalyseur sous forme réduite pour réoxyder l'électrocatalyseur et le co-catalyseur homogène, et on fait recirculer l'électrolyte contenant l'électrocatalyseur et le co-catalyseur homogène vers le réservoir pour traiter la matière organique.

**5.** Procédé selon la revendication 1,
caractérisé en ce qu'on sépare l'anode de la cathode dans la cellule électrolytique en interposant entre elles une membrane semi-perméable.

**6.** Procédé selon la revendication 4,
caractérisé en ce qu'on dissout la combinaison de catalyseur sous forme réduite ou sous forme oxydée, dans la solution d'électrolyte.

**7.** Procédé selon la revendication 1,
caractérisé en ce qu'on l'exécute à une température de 0°C à 500°C.

**8.** Procédé selon la revendication 1,
caractérisé en ce que l'anode est maintenue à un potentiel de travail de +0,5 à 1,5 V par rapport à celui de l'électrode normale à hydrogène.

FIG. 1

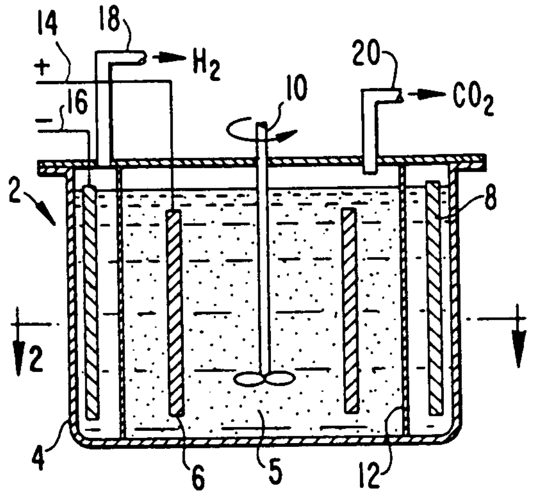


FIG. 2

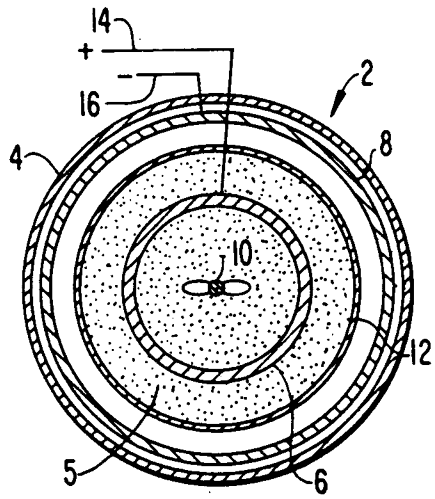


FIG. 3